# EUROPEAN PATENT APPLICATION

(11) **EP 4 693 669 A1**
(43) Date of publication of application: **11.02.2026**
(21) Application number: 23930932.1
(22) Date of filing: 18.12.2023
(51) Int. Cl.: H01M 50/298, F16L 3/22, H01M 50/204

(54) **GUIDE MEMBER AND BATTERY PACK**

(30) Priority: 28.03.2023 JP 2023051169
(71) Applicant: AESC Japan Ltd., Yokohama-shi, Kanagawa 220-0012 (JP)
(72) Inventor: TAKAGI, Gentaro, Zama-shi, Kanagawa 252-0012 (JP); KONDO, Yuka, Zama-shi, Kanagawa 252-0012 (JP)
(74) Representative: Mathys & Squire
(86) International application number: PCT/JP2023/045291
(87) International publication number: WO 2024/202313

(57) **Abstract**

A first guide member (300A) includes a first partition wall (308A) separating a first right guide groove (310A) and a first left guide groove (320A) that extend in the X direction, a pair of first locking parts (312A) to lock a first low-voltage wiring member (510A) inserted into the first right guide groove (310A) with at least part of the pair provided at the first partition wall (308A), and a pair of second locking parts (322A) to lock a first lower high-voltage wiring member (520A) inserted into the first left guide groove (320A) with at least part of the pair provided at the first partition wall (308A). The pair of first locking parts (312A) of the first right guide groove (310A) and the pair of second locking parts (322A) of the first left guide groove (320A) are displaced from each other in the X direction.

## Description

### TECHNICAL FIELD

The present invention relates to a guide member and a battery pack.

### BACKGROUND ART

In recent years, various battery packs have been developed. A battery pack includes a plurality of battery modules. The battery module includes a plurality of battery cells. The plurality of battery cells is electrically connected to each other in a combination of series and parallel. A wiring member such as a harness is electrically connected to the battery module.

Patent Document 1 describes a retainer releasably retaining a wire rod. The retainer includes a first housing part and a second housing part that can accommodate the wire rod. A wall block separating the first housing part and the second housing part is provided between the first housing part and the second housing part.

Patent Document 2 describes a clamp device for attaching a tube to an attaching surface. The clamp device includes a pair of clamp grooves separated by a boss part. A tube is inserted into each of the pair of clamp grooves.

### RELATED DOCUMENT

### PATENT DOCUMENT

Patent Document 1: Japanese Patent Application Publication No. 2019-113160
Patent Document 2: Japanese Unexamined Utility Model Application Publication No. H3-059578

### DISCLOSURE OF THE INVENTION

### TECHNICAL PROBLEM

A guide member that defines a plurality of guide grooves extending in a predetermined direction may be used to guide a plurality of wiring members. The guide member includes a partition wall separating adjacent guide grooves from each other and a locking mechanism to lock a wiring member inserted into each guide groove. When the positions of the locking mechanisms provided in the guide grooves are aligned in the predetermined direction, the width of the partition wall needs to be increased to maintain the strength of the partition wall around the locking mechanism. However, increasing the width of the partition wall may lead to upsizing of the guide member. Simply decreasing the width of the partition wall, on the other hand, may lead to a decrease in the strength of the guide member around the locking mechanism.

An example of the objective of the present invention is to achieve both the reduction in size and the enhancement of strength of the guide member. Other objects of the present invention will become apparent from the description herein.

### SOLUTION TO PROBLEM

An aspect of the present invention is as follows.
[1] A guide member including:
   a partition wall separating a plurality of guide grooves extending in a predetermined direction; and
   a locking mechanism to lock a wiring member inserted into each guide groove, at least part of the locking mechanism being provided at the partition wall, in which
   the locking mechanisms of the respective guide grooves are displaced from each other in the predetermined direction.
[2] The guide member according to [1], in which
   the locking mechanism of each guide groove includes a locking part deflectable toward an outside of each guide groove.
[3] The guide member according to [1] or [2], in which
   the wiring member includes a plurality of wires bundled together in the guide groove.
[4] A battery pack including:
   a plurality of battery modules; and
   the guide member according to any one of [1] to [3], in which
   the guide member is positioned between the battery modules.

### ADVANTAGEOUS EFFECTS OF INVENTION

According to the aspect described above of the present invention, both the reduction in size and the enhancement of strength of the guide member can be achieved.

### BRIEF DESCRIPTION OF THE DRAWINGS

[Fig. 1] A schematic perspective view of a battery pack according to an embodiment.
[Fig. 2] A schematic top view of the battery pack according to the embodiment with an upper case removed.
[Fig. 3] A detailed top view of a region α enclosed by the broken line attached around between the two battery modules positioned at the front part of a lower case in Fig. 2.
[Fig. 4] A detailed top view of a region β enclosed by the broken line attached around between the rear parts of the two battery modules positioned at the central part of the lower case in Fig. 2.
[Fig. 5] A left side view of a first guide member and a second guide member according to the embodiment.
[Fig. 6] A cross-sectional view taken along the line A-A in Fig. 3.
[Fig. 7] A cross-sectional view taken along the line B-B in Fig. 3.
[Fig. 8] A top view of the first guide member with a first low-voltage wiring member and a first lower high-voltage wiring member removed.
[Fig. 9] A cross-sectional view taken along the line C-C in Fig. 3.
[Fig. 10] A diagram illustrating a variant of Fig. 7.

### DESCRIPTION OF EMBODIMENTS

An embodiment of the present invention and a variant thereof will be described below by using the drawings. In all drawings, similar components are given the same reference signs and description thereof is omitted as appropriate.

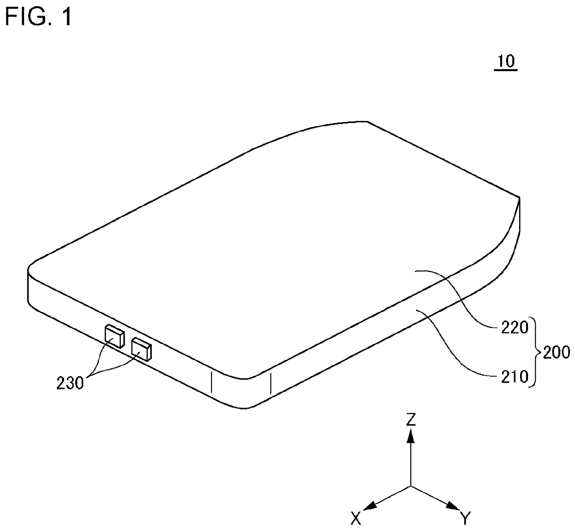

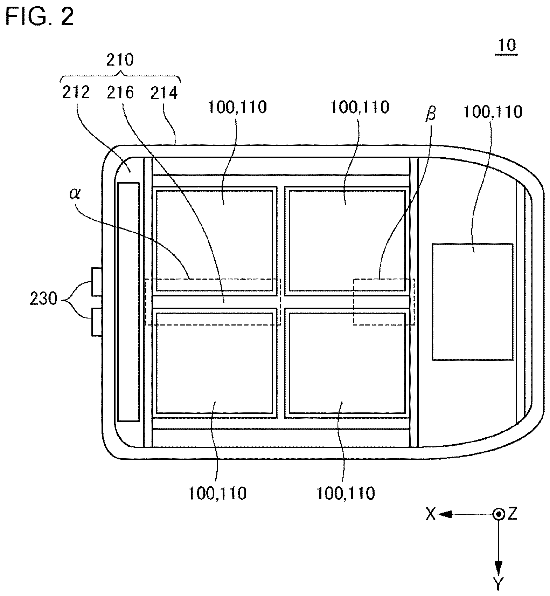

Fig. 1 is a schematic perspective view of a battery pack 10 according to the embodiment. Fig. 2 is a schematic top view of the battery pack 10 according to the embodiment with an upper case 220 removed.

In the embodiment, the battery pack 10 is mounted on an automobile. Specifically, the battery pack 10 is mounted between the front wheel and the rear wheel of the automobile. Unless otherwise specified, the battery pack 10 is described as being mounted on the automobile. However, the battery pack 10 is applicable to use other than the automobile.

For the sake of description, each figure indicates the X direction, the Y direction, and the Z direction. The X direction indicates the front-rear direction of the battery pack 10. The Y direction is orthogonal to the X direction. The Y direction indicates the left-right direction of the battery pack 10. The Z direction is orthogonal to both the X direction and the Y direction. The Z direction indicates the up-down direction of the battery pack 10. The arrow pointing in the X direction, the arrow pointing in the Y direction, and the arrow pointing in the Z direction respectively indicate the forward direction, the leftward direction, and the upward direction of the battery pack 10. In Fig. 2, the open circle marked with the dot indicates that the arrow pointing in the Z direction extends from the back to the front of the page. However, the relation between the X direction, the Y direction, and the Z direction, and the front-rear direction, the left-right direction, and the up-down direction of the battery pack 10 is not limited to this example.

In the embodiment, the front-rear direction, the left-right direction, and the up-down direction of the battery pack 10 are determined by the automobile on which the battery pack 10 is mounted. The X direction, the Y direction, and the Z direction respectively indicate the front-rear direction, the left-right direction, and the up-down direction of the automobile. The arrow pointing in the X direction, the arrow pointing in the Y direction, and the arrow pointing in the Z direction respectively indicate the forward direction, the leftward direction, and the upward direction of the automobile. However, the relation between the front-rear direction, the left-right direction and the up-down direction of the battery pack 10, and the front-rear direction, the left-right direction and the up-down direction the automobile is not limited to this example.

The direction perpendicular to the Z direction is hereinafter referred to as a horizontal direction as needed.

The battery pack 10 includes a plurality of battery modules 100 and a housing 200. In the embodiment, when viewed from the Z direction, the battery pack 10 includes four battery modules 100 arranged around the almost central part of the housing 200 and one battery module 100 arranged at the rear part of the housing 200. However, the number and the layout of the battery modules 100 included in the battery pack 10 are not limited to this example. For example, multiple battery modules 100 arranged around the almost central part of the housing 200 are sufficient, and the battery module 100 arranged at the rear part of the housing 200 may be omitted depending on the required battery pack 10 capacity. The housing 200 includes a lower case 210, an upper case 220, and a pair of terminals 230. For example, the lower case 210 may also be generally referred to as a tray or a main body part. The lower case 210 includes a lower plate 212, an outer frame 214, and an inner frame 216. For example, the upper case 220 may also be generally referred to as a cover or a lid part.

The plurality of battery modules 100 is mounted on the upper surface side of the lower plate 212. Each battery module 100 includes a plurality of unillustrated battery cells stacked in the horizontal direction and a housing case 110 in which the plurality of battery cells is accommodated. For example, in each battery module 100, a plurality of battery cell groups each including a plurality of battery cells connected in parallel is connected in series. Alternatively, a plurality of single battery cells may be connected in series.

When viewed from the Z direction, the outer frame 214 surrounds the plurality of battery modules 100. An unillustrated sealing material is arranged on the upper surface side of the outer frame 214. As a result, the lower case 210 and the upper case 220 can be attached to each other with the sealing material arranged between the upper surface of the outer frame 214 and the portion of the lower surface of the upper case 220 overlapping the outer frame 214 in the Z direction. Accordingly, the lower case 210 and the upper case 220 can form a housing space in which the plurality of battery modules 100 is accommodated.

When viewed from the Z direction, the inner frame 216 is positioned in the region surrounded by the outer frame 214. When viewed from the Z direction, the inner frame 216 at least partially surrounds the four battery modules 100. As described above, the number and the layout of battery modules 100 included in the battery pack 10 are not limited to this example; and the number of battery modules 100 surrounded by the inner frame 216 is not limited to four and may be, for example, two or more than four.

The pair of terminals 230 is provided on the front side of the outer frame 214. The pair of terminals 230 is arranged side by side generally in parallel in the Y direction. The front end of each terminal 230 protrudes forward from the front of the outer frame 214. The plurality of battery modules 100 is connected in series between the pair of terminals 230 in terms of an electric path.

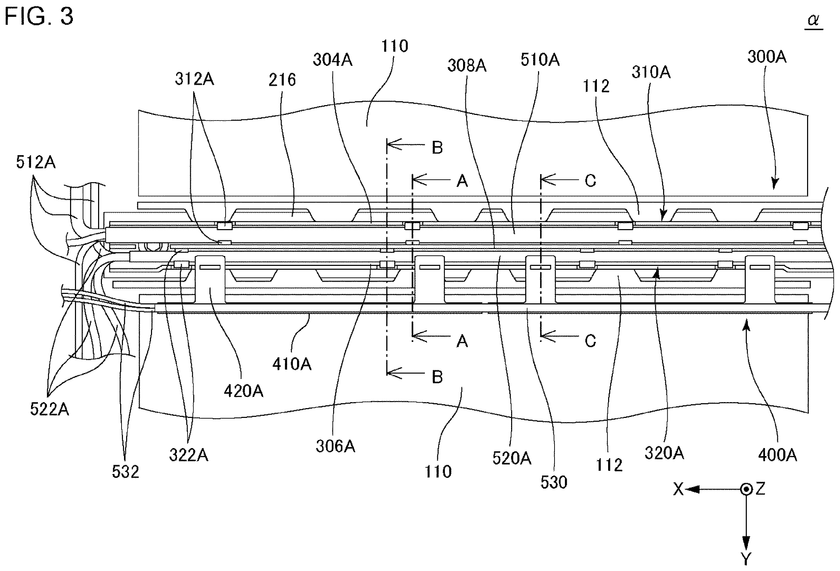

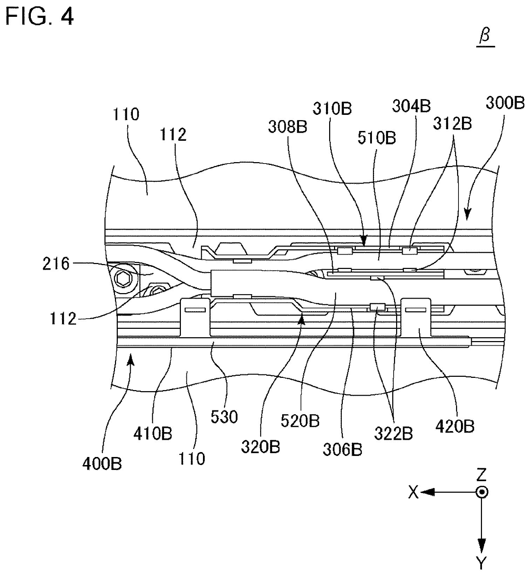

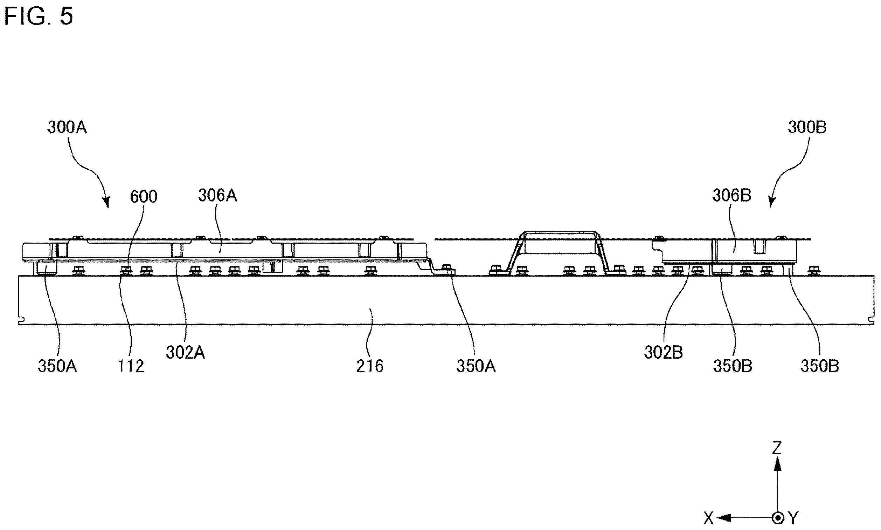

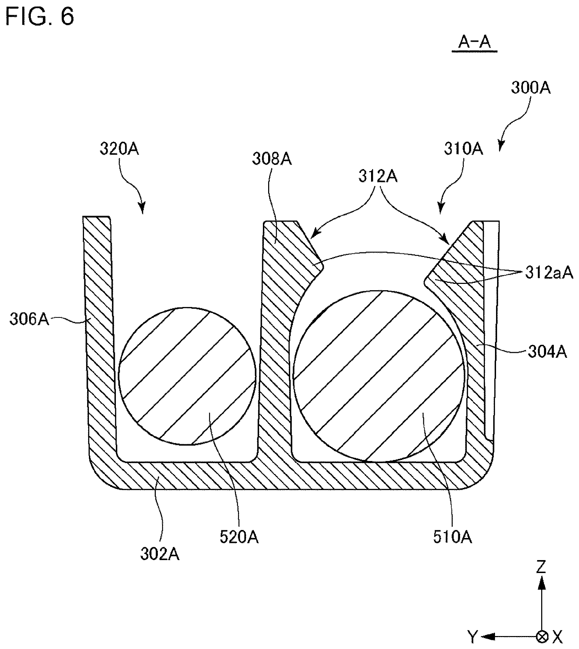

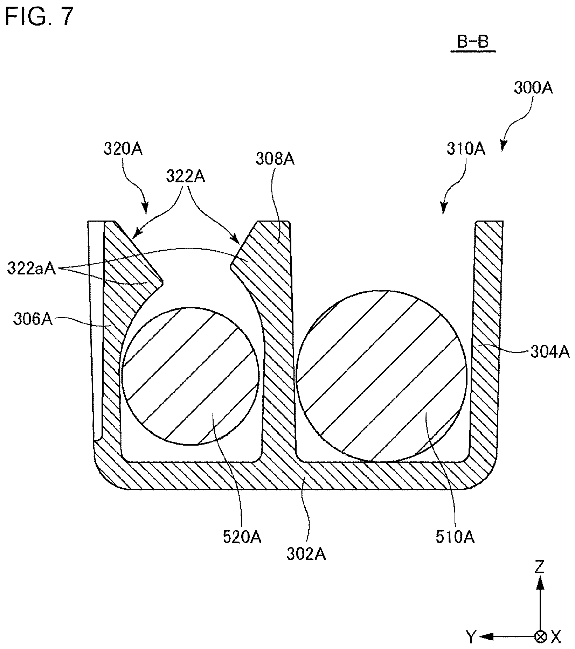

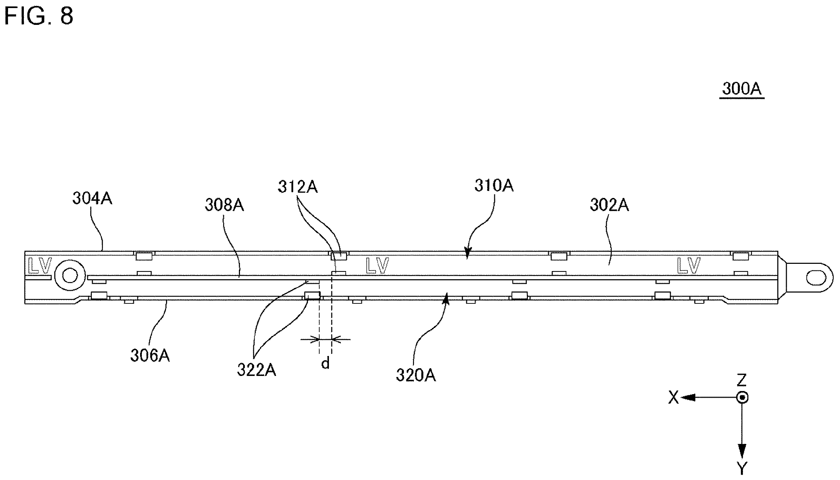

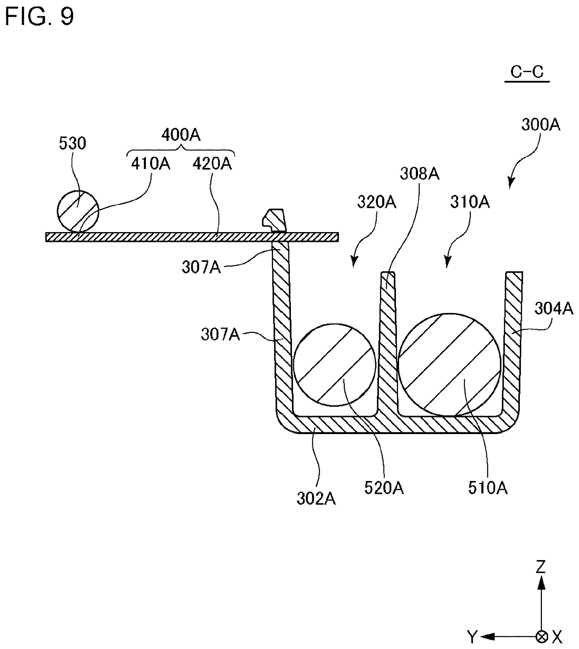

Fig. 3 is a detailed top view of the region α enclosed by the broken line attached around between the two battery modules 100 positioned at the front part of the lower case 210 in Fig. 2. Fig. 4 is a detailed top view of the region β enclosed by the broken line attached around between the rear parts of the two battery modules 100 positioned at the central part of the lower case 210 in Fig. 2. Fig. 5 is a left side view of a first guide member 300A and a second guide member 300B according to the embodiment. Fig. 6 is a cross-sectional view taken along the line A-A in Fig. 3. Fig. 7 is a cross-sectional view taken along the line B-B in Fig. 3. Fig. 8 is a top view of the first guide member 300A with a first low-voltage wiring member 510A and a first lower high-voltage wiring member 520A removed. Fig. 9 is a cross-sectional view taken along the line C-C in Fig. 3.

As illustrated in Fig. 3 and Fig. 4, the battery pack 10 includes the first guide member 300A, the second guide member 300B, a first support 400A, a second support 400B, the first low-voltage wiring member 510A, a second low-voltage wiring member 510B, the first lower high-voltage wiring member 520A, a second lower high-voltage wiring member 520B, and an upper high-voltage wiring member 530. As illustrated in Fig. 3 and Fig. 5 to Fig. 9, the first guide member 300A includes a first bottom 302A, a first right wall 304A, a first left wall 306A, a first partition wall 308A, and a plurality of first supporting legs 350A. As illustrated in Fig. 4 and Fig. 5, the second guide member 300B includes a second bottom 302B, a second right wall 304B, a second left wall 306B, a second partition wall 308B, and a plurality of second supporting legs 350B. As illustrated in Fig. 3, the first support 400A includes a first extension part 410A and a plurality of first attaching protrusions 420A. As illustrated in Fig. 4, the second support 400B includes a second extension part 410B and a plurality of second attaching protrusions 420B.

With reference to Fig. 3 and Fig. 4 and with reference to Fig. 2 as needed, the first guide member 300A, the second guide member 300B, the first support 400A, the second support 400B, the first low-voltage wiring member 510A, the first lower high-voltage wiring member 520A, and the upper high-voltage wiring member 530 will be described.

As illustrated in Fig. 2 and Fig. 3, when viewed from the Z direction, the first guide member 300A is positioned between the two battery modules 100 arranged side by side in the Y direction at the X direction front part of the lower case 210. The first guide member 300A defines a first right guide groove 310A and a first left guide groove 320A. The first right guide groove 310A and the first left guide groove 320A extend generally parallel to the Y direction.

As illustrated in Fig. 2 and Fig. 4, when viewed from the Z direction, the second guide member 300B is positioned between the rear parts of the two battery modules 100 arranged side by side in the Y direction at the X direction almost central part of the lower case 210. The second guide member 300B defines a second right guide groove 310B and a second left guide groove 320B. The second right guide groove 310B and the second left guide groove 320B extend generally parallel to the Y direction.

As illustrated in Fig. 3, when viewed from the Z direction, the first support 400A is positioned to the left of the first guide member 300A. The first extension part 410A extends generally parallel to the Y direction. The plurality of first attaching protrusions 420A protrudes rightward from the right side of the first extension part 410A.

As illustrated in Fig. 4, when viewed from the Z direction, the second support 400B is positioned to the left of the second guide member 300B. The second extension part 410B extends generally parallel to the Y direction. The plurality of second attaching protrusions 420B protrudes rightward from the right side of the second extension part 410B.

As illustrated in Fig. 3, the first low-voltage wiring member 510A is inserted into the first right guide groove 310A. As a result, the first low-voltage wiring member 510A extends generally parallel to the X direction along the first right guide groove 310A. In the embodiment, the first low-voltage wiring member 510A is a harness. The first low-voltage wiring member 510A includes a plurality of first low-voltage wires 512A. In the first right guide groove 310A, for example, the plurality of first low-voltage wires 512A is bundled together by a binding member such as a tape or a tube. For example, the plurality of first low-voltage wires 512A includes low-voltage wires such as a wire operating as a signal line and a wire constituting a circuit constituted of a vehicular 12 V power source. However, the first low-voltage wiring member 510A may be constituted of a single low-voltage wire.

As illustrated in Fig. 4, the second low-voltage wiring member 510B is inserted into the second right guide groove 310B. As a result, the second low-voltage wiring member 510B extends generally parallel to the X direction along the second right guide groove 310B. In the embodiment, the second low-voltage wiring member 510B is a harness. The second low-voltage wiring member 510B includes a plurality of low-voltage wires bundled together in the second right guide groove 310B in the same way as the first low-voltage wiring member 510A. However, the second low-voltage wiring member 510B may be constituted of a single low-voltage wire.

As illustrated in Fig. 3, the first lower high-voltage wiring member 520A is inserted into the first left guide groove 320A. As a result, the first lower high-voltage wiring member 520A extends generally parallel to the Y direction along the first left guide groove 320A. In the embodiment, the first lower high-voltage wiring member 520A is a harness. The first lower high-voltage wiring member 520A includes a plurality of first lower high-voltage wires 522A. In the first left guide groove 320A, for example, the plurality of first lower high-voltage wires 522A is bundled together by a binding member such as a tape or a tube. For example, the plurality of first lower high-voltage wires 522A includes high-voltage wires such as a voltage detection line for detecting the voltage of each battery cell included in the battery module 100 and a signal line for a thermistor detecting the temperature of each battery cell included in the battery module 100. However, the first lower high-voltage wiring member 520A may be constituted of a single wire.

As illustrated in Fig. 4, the second lower high-voltage wiring member 520B is inserted into the second left guide groove 320B. As a result, the second lower high-voltage wiring member 520B extends generally parallel to the Y direction along the second left guide groove 320B. In the embodiment, the second lower high-voltage wiring member 520B is a harness. The second lower high-voltage wiring member 520B includes a plurality of high-voltage wires bundled together in the second left guide groove 320B in the same way as the first lower high-voltage wiring member 520A. However, the second lower high-voltage wiring member 520B may be constituted of a single high-voltage wire.

As illustrated in Fig. 3 and Fig. 4, the upper high-voltage wiring member 530 is mounted on the upper surfaces of both the first extension part 410A and the second extension part 410B. As a result, the upper high-voltage wiring member 530 extends generally parallel to the Y direction along the first extension part 410A and the second extension part 410B. In the embodiment, the upper high-voltage wiring member 530 is a harness. As illustrated in Fig. 3, the upper high-voltage wiring member 530 includes a plurality of upper high-voltage wires 532. For example, the plurality of upper high-voltage wires 532 are bundled together by a binding member such as a tape or a tube on the upper surface sides of the first extension part 410A and the second extension part 410B. For example, a plurality of upper high-voltage wiring members 530 includes high-voltage wires such as a wire for supplying power to a heater for heating each battery cell included in the battery module 100. However, the upper high-voltage wiring member 530 may be constituted of a single high-voltage wire.

In the embodiment, the first low-voltage wiring member 510A and the first lower high-voltage wiring member 520A are routed generally parallel to the X direction using the first guide member 300A between the two battery modules 100 arranged side by side in the Y direction at the front part of the lower case 210. As a result, the first low-voltage wiring member 510A and the first lower high-voltage wiring member 520A can be protected from surrounding components by the first guide member 300A. In addition, even when the gap between the two battery modules 100 arranged side by side in the Y direction is relatively small, the workability of routing the first low-voltage wiring member 510A and the first lower high-voltage wiring member 520A can be improved compared to when the first guide member 300A is not used. For example, a relatively large space is required even when the first low-voltage wiring member 510A or the first lower high-voltage wiring member 520A is fixed to the battery module 100 by using a clip without using the first guide member 300A. In the embodiment, on the other hand, the first low-voltage wiring member 510A and the first lower high-voltage wiring member 520A can be arranged in a narrower space than when the clip is used. The same applies to the second guide member 300B, the second low-voltage wiring member 510B, and the second lower high-voltage wiring member 520B.

In the embodiment, the first low-voltage wiring member 510A is routed along the first right guide groove 310A with the plurality of first low-voltage wires 512A bundled together. As a result, the plurality of first low-voltage wires 512A can be more easily routed along the first right guide groove 310A than when the plurality of first low-voltage wires 512A is not bundled together. Similarly, the first lower high-voltage wiring member 520A is routed along the first left guide groove 320A with the plurality of first lower high-voltage wires 522A bundled together. As a result, the plurality of first lower high-voltage wires 522A can be more easily routed along the first left guide groove 320A than when the plurality of first lower high-voltage wires 522A is not bundled together.

The first guide member 300A and the second guide member 300B will be described with reference to Fig. 5 and with reference to Fig. 3 and Fig. 4 as needed.

As illustrated in Fig. 3, when viewed from the Z direction, a plurality of supporting protrusions 112 protrude leftward from the left side of the housing case 110 of the battery module 100 positioned on the front-right side relative to the central part of the lower case 210. As illustrated in Fig. 5, each supporting protrusion 112 and the upper surface of the inner frame 216 are fastened together by a fastener 600. As a result, when viewed from the Z direction, the battery module 100 positioned on the front-right side relative to the central part of the lower case 210 is fixed to the lower case 210 via the fastener 600. In the example illustrated in Fig. 5, the fastener 600 is a bolt. Each supporting protrusion 112 serves as a support part for fixing the housing case 110 and the lower case 210 to each other. When viewed from the Z direction, a plurality of supporting protrusions 112 protrude rightward from the right side of the housing case 110 of a battery module 100 positioned on the front-left side relative to the central part of the lower case 210. As a result, the battery module 100 positioned on the front-left side relative to the central part of the lower case 210 can also be fixed to the lower case 210 via a fastener 600. The same applies to battery modules 100 positioned on the rear-right and rear-left sides relative to the central part of the lower case 210 when viewed from the Z direction.

As illustrated in Fig. 5, the plurality of first supporting legs 350A supports the first bottom 302A of the first guide member 300A with the upper surface of the inner frame 216 of the lower case 210 and the lower surface of the first bottom 302A of the first guide member 300A spaced from each other through a gap. At least part of each of the plurality of supporting protrusions 112 and at least part of each of the plurality of fasteners 600 are positioned in the gap between the upper surface of the inner frame 216 and the lower surface of the first bottom 302A. In the example illustrated in Fig. 5, the supporting protrusion 112 and the head of the bolt of the fastener 600 overlap each other in the Z direction. In the example illustrated in Fig. 5, the supporting protrusion 112 and the head of each fastener 600 are positioned in the gap between the lower surface of the first bottom 302A and the upper surface of the inner frame 216 while the supporting protrusion 112 is positioned between the upper surface of the inner frame 216 and the head of the fastener 600. Accordingly, in the example illustrated in Fig. 5, the first guide member 300A, the supporting protrusion 112, and a plurality of fasteners 600 can be overlapped on one another in the Z direction. In other words, it is not necessary to displace the first guide member 300A, the supporting protrusion 112, and the heads of the fasteners 600 in the horizontal direction. As a result, the first guide member 300A, the supporting protrusion 112, and the heads of the fasteners 600 can be arranged in a more spatially efficient manner in the horizontal direction than when the first guide member 300A, the supporting protrusion 112, and the heads of the fasteners 600 are displaced in the horizontal direction. In the example illustrated in Fig. 5, the plurality of first supporting legs 350A is provided at the two locations of the front and rear parts of the first bottom 302A. However, the positions where the first supporting legs 350A are provided are not limited to this example.

As illustrated in Fig. 5, the plurality of second supporting legs 350B supports the second bottom 302B of the second guide member 300B with the upper surface of the inner frame 216 of the lower case 210 and the lower surface of the second bottom 302B of the second guide member 300B spaced from each other through a gap. At least part of each of the plurality of supporting protrusions 112 and at least part of each of the plurality of fasteners 600 are positioned in the gap between the upper surface of the inner frame 216 and the lower surface of the second bottom 302B. As a result, the second guide member 300B, the supporting protrusions 112, and the heads of the fasteners 600 can be arranged in a more spatially efficient manner in the horizontal direction than when the second guide member 300B, the supporting protrusions 112, and the heads of the fasteners 600 are displaced in the horizontal direction.

In the embodiment, the first guide member 300A and the second guide member 300B are attached to the inner frame 216. Accordingly, the load applied to the lower plate 212 can be reduced as compared to when the first guide member 300A and the second guide member 300B are attached to the lower plate 212. Accordingly, the lower plate 212 no longer requires high rigidity and has a structure that is particularly suitable for use as a cooling plate through which a water cooling pipe or the like passes. When the battery pack 10 is fixed from the lower side of the automobile, the first guide member 300A and the second guide member 300B may be attached to the inner frame 216. However, the first guide member 300A and the second guide member 300B may be attached to the lower plate 212.

The first guide member 300A will be described with reference to Fig. 6 to Fig. 8.

The first right wall 304A protrudes upward from the upper surface of the right end part of the first bottom 302A. The first left wall 306A protrudes upward from the upper surface of the left end part of the first bottom 302A. The first partition wall 308A protrudes upward from the part of the upper surface of the first bottom 302A between the lower end part of the first right wall 304A and the lower end part of the first left wall 306A. The part of the first bottom 302A between the lower end part of the first right wall 304A and the lower end part of the first partition wall 308A will be hereinafter simply referred to as a right part of the first bottom 302A, and the part of the first bottom 302A between the lower end part of the first left wall 306A and the lower end part of the first partition wall 308A will be simply referred to as a left part of the first bottom 302A.

The bottom surface, the right inner side surface, and the left inner side surface of the first right guide groove 310A are respectively defined by the upper surface of the right part of the first bottom 302A, the left outer side surface of the first right wall 304A, and the right outer side surface of the first partition wall 308A. The first right guide groove 310A is open upward. As a result, the first low-voltage wiring member 510A can be inserted into the first right guide groove 310A from above.

The bottom surface, the left inner side surface, and the right inner side surface of the first left guide groove 320A are respectively defined by the upper surface of the left part of the first bottom 302A, the right outer side surface of the first left wall 306A, and the left outer side surface of the first partition wall 308A. The first left guide groove 320A is open upward. As a result, the first lower high-voltage wiring member 520A can be inserted into the first left guide groove 320A from above.

The first partition wall 308A is positioned between the first right guide groove 310A and the first left guide groove 320A in the Y direction. Specifically, the right outer side surface and the left outer side surface of the first partition wall 308A respectively define the left inner side surface of the first right guide groove 310A and the right inner side surface of the first left guide groove 320A. As a result, the first partition wall 308A separates the first right guide groove 310A and the first left guide groove 320A from each other in the Y direction.

As illustrated in Fig. 6, the first guide member 300A includes a pair of first locking parts 312A. The pair of first locking parts 312A is positioned on opposite sides of the first right guide groove 310A in the Y direction. The right first locking part 312A is provided at the first right wall 304A. The left first locking part 312A is provided at the first partition wall 308A. Each first locking part 312A has a cantilever structure. As a result, when viewed from the X direction, the pair of first locking parts 312A is deflectable toward the outside of the first right guide groove 310A in the Y direction. In other words, when viewed from the X direction, the right first locking part 312A is deflectable rightward and the left first locking part 312A is deflectable leftward.

As illustrated in Fig. 6, a first locking protrusion 312aA is provided at the upper end of each first locking part 312A. When viewed from the X direction, each first locking protrusion 312aA protrudes toward the inside of the first right guide groove 310A in the Y direction. In other words, when viewed from the X direction, the right first locking protrusion 312aA protrudes leftward and the left first locking protrusion 312aA protrudes rightward. When viewed from the X direction, the upper surface of each first locking protrusion 312aA is inclined downward toward the inside of the first right guide groove 310A in the Y direction. When viewed from the X direction, the lower surface of each first locking protrusion 312aA is inclined upward toward the inside of the first right guide groove 310A in the Y direction.

As illustrated in Fig. 7, the first guide member 300A includes a pair of second locking parts 322A. The pair of second locking parts 322A is positioned on opposite sides of the first left guide groove 320A in the Y direction. The left second locking part 322A is provided at the first left wall 306A. The right second locking part 322A is provided at the first partition wall 308A. Each second locking part 322A has a cantilever structure. As a result, when viewed from the X direction, the pair of second locking parts 322A is deflectable toward the outside of the first left guide groove 320A in the Y direction. In other words, when viewed from the X direction, the left second locking part 322A is deflectable leftward and the right second locking part 322A is deflectable rightward.

As illustrated in Fig. 7, a second locking protrusion 322aA is provided at the upper end of each second locking part 322A. When viewed from the X direction, each second locking protrusion 322aA protrudes toward the inside of the first left guide groove 320A in the Y direction. In other words, when viewed from the X direction, the left second locking protrusion 322aA protrudes rightward and the right second locking protrusion 322aA protrudes leftward. When viewed from the X direction, the upper surface of each second locking protrusion 322aA is inclined downward toward the inside of the first left guide groove 320A in the Y direction. When viewed from the X direction, the lower surface of each second locking protrusion 322aA is inclined upward toward the inside of the first left guide groove 320A in the Y direction.

The pair of first locking parts 312A forms a locking mechanism to lock the first low-voltage wiring member 510A inserted into the first right guide groove 310A. Specifically, the pair of first locking parts 312A removably locks the first low-voltage wiring member 510A to the first right guide groove 310A.

A method of attaching the first low-voltage wiring member 510A to the first right guide groove 310A will be described.

First, the first low-voltage wiring member 510A is placed above the pair of first locking parts 312A. The minimum value of the width of the gap between the pair of first locking protrusions 312aA in the Y direction is less than the diameter of the first low-voltage wiring member 510A in a direction perpendicular to the X direction while the pair of first locking parts 312A is not deflected in the Y direction without receiving an external force from the first low-voltage wiring member 510A.

Next, the first low-voltage wiring member 510A is moved toward the first right guide groove 310A to bring the lower surface of the first low-voltage wiring member 510A and the upper surface of each first locking protrusion 312aA into contact with each other. Next, the first low-voltage wiring member 510A is pushed toward the first right guide groove 310A. By pushing the first low-voltage wiring member 510A toward the first right guide groove 310A, the lower surface of the first low-voltage wiring member 510A slides against the upper surface of the pair of first locking protrusions 312aA and the pair of first locking parts 312A deflects toward the outside of the first right guide groove 310A in the Y direction. When the pair of first locking parts 312A deflects toward the outside of the first right guide groove 310A in the Y direction until the minimum value of the width of the gap between the pair of first locking protrusions 312aA reaches the diameter of the first low-voltage wiring member 510A in the direction perpendicular to the X direction, the first low-voltage wiring member 510A passes through the gap between the pair of first locking protrusions 312aA and enters the first right guide groove 310A.

When the first low-voltage wiring member 510A enters the first right guide groove 310A, the pair of first locking parts 312A no longer receive an external force from the first low-voltage wiring member 510A to release the Y direction deflecting of the pair of first locking parts 312A. As a result, the minimum value of the width of the gap between the pair of first locking protrusions 312aA in the Y direction becomes less than the diameter of the first low-voltage wiring member 510A in the direction perpendicular to the X direction. Accordingly, the first low-voltage wiring member 510A can be prevented from becoming detached through the gap between the pair of first locking protrusions 312aA from the first right guide groove 310A. As a result, the first low-voltage wiring member 510A is locked to the first right guide groove 310A.

A method of removing the first low-voltage wiring member 510A from the first right guide groove 310A will be described.

First, when the first low-voltage wiring member 510A is inserted into the first right guide groove 310A, the first low-voltage wiring member 510A is moved upward to bring the upper surface of the first low-voltage wiring member 510A and the lower surface of each first locking protrusion 312aA into contact with each other . Next, the first low-voltage wiring member 510A is pushed toward the upper side of the first right guide groove 310A. By pushing the first low-voltage wiring member 510A toward the upper side of the first right guide groove 310A, the upper surface of the first low-voltage wiring member 510A slides against the lower surface of the pair of locking protrusions 312aA and the pair of locking parts 312A deflects toward the outside of the first right guide groove 310A in the Y direction. When the pair of locking parts 312A deflects toward the outside of the first right guide groove 310A in the Y direction until the minimum value of the width of the gap between the pair of locking protrusions 312aA reaches the diameter of the first low-voltage wiring member 510A in the direction perpendicular to the X direction, the first low-voltage wiring member 510A passes through the gap between the pair of locking protrusions 312aA and exits from the first right guide groove 310A. When the first low-voltage wiring member 510A exits from the first right guide groove 310A, the pair of locking parts 312A no longer receive an external force from the first low-voltage wiring member 510A to release the Y direction deflecting of the pair of locking parts 312A.

In the example illustrated in Fig. 7, when viewed from the X direction, the upper surface of each first locking protrusion 312aA is inclined downward toward the inside of the first right guide groove 310A in the Y direction. As a result, when the first low-voltage wiring member 510A is pushed toward the first right guide groove 310A with the lower surface of the first low-voltage wiring member 510A and the upper surface of each first locking protrusion 312aA in contact with each other, the pair of first locking parts 312A can be more easily deflect toward the outside of the first right guide groove 310A in the Y direction than when the upper surface of each first locking protrusion 312aA is generally parallel to the Y direction.

In the example illustrated in Fig. 7, when viewed from the X direction, the lower surface of each first locking protrusion 312aA is inclined upward toward the inside of the first right guide groove 310A in the Y direction. As a result, when the first low-voltage wiring member 510A is pushed toward the upper part of the first right guide groove 310A with the upper surface of the first low-voltage wiring member 510A and the lower surface of each first locking protrusion 312aA in contact with each other, the pair of first locking parts 312A can be more easily deflect toward the outside of the first right guide groove 310A in the Y direction than when the upper surface of each first locking protrusion 312aA is generally parallel to the Y direction.

In the example illustrated in Fig. 7, when viewed from the X direction, the lower surface of each first locking protrusion 312aA is curved along the outer surface of the first low-voltage wiring member 510A inserted into the first right guide groove 310A. As a result, when viewed from the X direction, the gap between the lower surface of each first locking protrusion 312aA and the outer surface of the first low-voltage wiring member 510A can be reduced. Accordingly, the first low-voltage wiring member 510A can be made less loose within the first right guide groove 310A.

The pair of second locking parts 322A forms a locking mechanism to lock the first lower high-voltage wiring member 520A inserted into the first left guide groove 320A in the same way as the pair of first locking parts 312A. Specifically, the pair of second locking parts 322A removably locks the first lower high-voltage wiring member 520A to the first left guide groove 320A in the same way as the pair of first locking parts 312A. In the embodiment, the diameter of the first lower high-voltage wiring member 520A in the direction perpendicular to the X direction is less than the diameter of the first low-voltage wiring member 510A in the direction perpendicular to the X direction. However, the relation between the diameter of the first low-voltage wiring member 510A and the diameter of the first lower high-voltage wiring member 520A is not limited to this example.

The first guide member 300A will be described with reference to Fig. 3 and Fig. 8 and with reference to Fig 6 and Fig. 7 as needed.

As illustrated in Fig. 3 and Fig. 8, a plurality of pairs of first locking parts 312A is arranged generally parallel to the X direction at irregular intervals on the first right guide groove 310A. However, the plurality of pairs of first locking parts 312A may be arranged substantially parallel to the X direction at regular intervals. As illustrated in Fig. 3 and Fig. 8, a plurality of pairs of second locking parts 322A is arranged generally parallel to the X direction at irregular intervals on the first left guide groove 320A. However, the plurality of pairs of second locking parts 322A may be arranged generally parallel to the X direction at regular intervals.

As illustrated in Fig. 3 and Fig. 8, the X direction position of each of the plurality of pairs of first locking parts 312A and the X direction position of each of the plurality of pairs of second locking parts 322A are displaced from each other in a direction generally parallel to the X direction. Specifically, any part of each first locking part 312A provided at the first partition wall 308A and any part of each second locking part 322A provided at the first partition wall 308A are not aligned in the X direction. As a result, the strength of the first partition wall 308A around each first locking part 312A and each second locking part 322A can be enhanced while the width of the first partition wall 308A in the Y direction is reduced, as compared to when the X direction position of each of the plurality of first locking parts 312A and the X direction position of each of the plurality of second locking parts 322A are aligned in the X direction. Accordingly, in the embodiment, both the reduction in size and the enhancement of strength of the first guide member 300A can be achieved compared with the previously discussed case.

In the embodiment, the X direction spacing between each first locking part 312A provided at the first partition wall 308A and each second locking part 322A provided at the first partition wall 308A may be for example 50% or more of the Y direction width of the first partition wall 308A. When the spacing is equal to or greater than the value, the durability of the first partition wall 308A around the first locking part 312A and the second locking part 322A can be improved as compared to when the spacing is less than the value. As illustrated in Fig. 8 with "d", the X direction spacing between each first locking part 312A provided at the first partition wall 308A and each second locking part 322A provided at the first partition wall 308A is the X direction distance between the part of the first locking part 312A closest to the second locking part 322A and the part of the second locking part 322A closest to the first locking part 312A.

In the embodiment, the first locking parts 312A are provided at both the first right wall 304A and the first partition wall 308A. However, the first locking parts 312A may be provided at the first partition wall 308A without being provided at the first right wall 304A. Similarly, the second locking parts 322A are provided at both the first left wall 306A and the first partition wall 308A. However, the second locking parts 322A may be provided at the first partition wall 308A without being provided at the first left wall 306A.

In the example illustrated in Fig. 8, letters "LV" are marked on the upper surface of the first bottom 302A of the first right guide groove 310A at three locations. For example, "LV" stands for low voltage. Therefore, affixing mark, such as a character, a number, a figure, and a symbol, on at least one of the upper surface of the first bottom 302A of the first right guide groove 310A and the upper surface of the first bottom 302A of the first left guide groove 320A can indicate which wiring member should be inserted into each groove. Accordingly, the risk of the wiring member being inserted mistakenly into each groove can be reduced as compared to when the mark is not affixed. The method of forming the mark is not particularly limited. For example, the mark may be formed by embossing or by a laser marker.

The locking of the first low-voltage wiring member 510A to the first right guide groove 310A and the locking of the first lower high-voltage wiring member 520A to the first left guide groove 320A that have been described with reference to Fig. 3 and Fig. 6 to Fig. 8 are also applicable to locking of the second lower high-voltage wiring member 520B to the second right guide groove 310B and locking of the second lower high-voltage wiring member 520B to the second left guide groove 320B. As illustrated in Fig. 4, the second guide member 300B includes a pair of third locking parts 312B and a pair of fourth locking parts 322B. The pair of third locking parts 312B is provided at the second right guide groove 310B. The pair of fourth locking parts 322B is provided at the second left guide groove 320B.

The first guide member 300A will be described with reference to Fig. 9 and with reference to Fig. 3 as needed.

As illustrated in Fig. 9, a retaining protrusion 307A protrudes upward from the upper end of the first left wall 306A. The retaining protrusion 307A retains the right end of the first attaching protrusion 420A. As a result, the Z direction position of the first support 400A is higher than the Z direction position of the first low-voltage wiring member 510A and the Z direction position of the first lower high-voltage wiring member 520A. Accordingly, the upper high-voltage wiring member 530 can be supported at a position higher than the first right guide groove 310A and the first left guide groove 320A in the Z direction. As a result, noise interference between the upper high-voltage wiring member 530 and the first low-voltage wiring member 510A can be reduced as compared to when the Z direction position of the upper high-voltage wiring member 530 and the Z direction position of the first low-voltage wiring member 510A are aligned in the Z direction. Similarly, noise interference between the first lower high-voltage wiring member 520A and the upper high-voltage wiring member 530 can be reduced as compared to when the Z direction position of the upper high-voltage wiring member 530 and the Z direction position of the first lower high-voltage wiring member 520A are aligned in the Z direction.

In the embodiment, the diameter of the upper high-voltage wiring member 530 in the direction perpendicular to the X direction is smaller than both the diameter of the first low-voltage wiring member 510A in the direction perpendicular to the X direction and the diameter of the first lower high-voltage wiring member 520A in the direction perpendicular to the X direction. However, the relation between the diameter of the first low-voltage wiring member 510A, the diameter of the first lower high-voltage wiring member 520A, and the diameter of the upper high-voltage wiring member 530 is not limited to this example.

The positional relation between each of the first low-voltage wiring member 510A, the first lower high-voltage wiring member 520A, and the upper high-voltage wiring member 530 described with reference to Fig. 9 and Fig. 3 is also applicable to the positional relation between each of the second low-voltage wiring member 510B, the second lower high-voltage wiring member 520B, and the upper high-voltage wiring member 530.

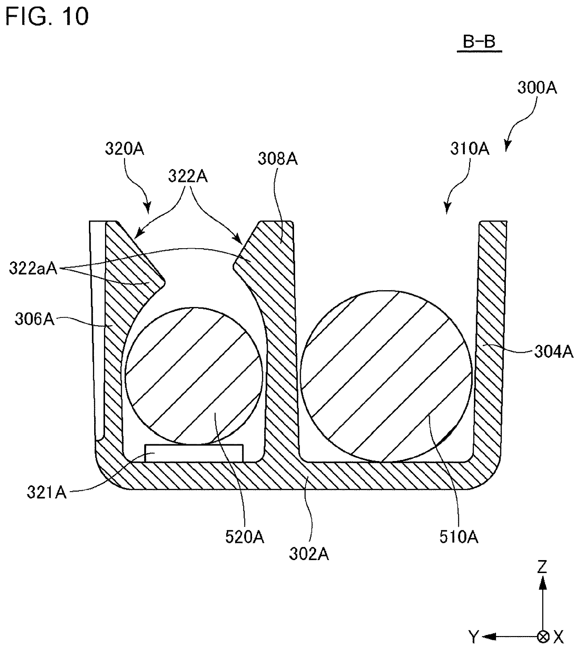

Fig. 10 is a diagram illustrating a variant of Fig. 7.

In the example illustrated in Fig. 10, a convex part 321A is provided on the upper surface of the first bottom 302A in the first left guide groove 320A. For example, the convex part 321A is formed by a mark such as "LV" illustrated in Fig. 8. When the Z direction height of the convex part 321A is adjusted to a suitable height, a wiring member with a diameter larger than that of a wiring member to be inserted into the first left guide groove 320A can be prevented from being mistakenly inserted into the first left guide groove 320A. Specifically, even if a wiring member with a diameter larger than that of a wiring member to be inserted into the first left guide groove 320A is inserted into the first left guide groove 320A, the pair of second locking protrusions 322aA contacts the wiring member and the Y direction deflecting of the pair of second locking parts 322A is not released, provided that the Z direction height of the convex part 321A is adjusted to a suitable height. As a result, the risk of a wiring member being mistakenly inserted into the first left guide groove 320A can be reduced as compared to when the convex part 321A is not present. The mark such as "LV" allows visual recognition of a groove through which a wire for the Lower Voltage side is to pass.

The embodiment and the variant of the present invention have been described above with reference to the drawings, but these are illustrative examples of the present invention and various configurations other than those described above may be employed.

For example, in the embodiment, each guide member defined two guide grooves extending in a predetermined direction. However, the guide member may define three or more guide grooves extending in the predetermined direction.

This application claims priority based on Japanese Patent Application No. 2023-051169 filed on March 28, 2023, the disclosure of which is incorporated herein in its entirety by reference.

### REFERENCE SIGNS LIST

10 Battery pack, 100 Battery module, 110 Housing case, 112 Supporting protrusion, 200 Housing, 210 Lower case, 212 Lower plate, 214 Outer frame, 216 Inner frame, 220 Upper case, 230 Terminal, 300A First guide member, 300B Second guide member, 302A First bottom, 302B Second bottom, 304A First right wall, 304B Second right wall, 306A First left wall, 306B Second left wall, 307A Retaining protrusion, 308A First partition wall, 308B Second partition wall, 310A First right guide groove, 310B Second right guide groove, 312A First locking part, 312B Third locking part, 312aA First locking protrusion, 320A First left guide groove, 320B Second left guide groove, 321A Convex part, 322A Second locking part, 322B Fourth locking part, 322aA Second locking protrusion, 350A First supporting leg, 350B Second supporting leg, 400A First support, 400B Second support, 410A First extension part, 410B Second extension part, 420A First attaching protrusion, 420B Second attaching protrusion, 510A First low-voltage wiring member, 510B Second low-voltage wiring member, 512A First low-voltage wire, 520A First lower high-voltage wiring member, 520B Second lower high-voltage wiring member, 522A First lower high-voltage wire, 530 Upper high-voltage wiring member, 532 Upper high-voltage wire, 600 Fastener

## Claims

1. A guide member comprising:
a partition wall separating a plurality of guide grooves extending in a predetermined direction; and
a locking mechanism to lock a wiring member inserted into each guide groove, at least part of the locking mechanism being provided at the partition wall, wherein
the locking mechanisms of the respective guide grooves are displaced from each other in the predetermined direction.

2. The guide member according to claim 1, wherein
the locking mechanism of each guide groove includes a locking part deflectable toward an outside of each guide groove.

3. The guide member according to claim 1, wherein
the wiring member includes a plurality of wires bundled together in the guide groove.

4. A battery pack comprising:
a plurality of battery modules; and
the guide member according to any one of claims 1 to 3, wherein
the guide member is positioned between the battery modules.
